# EUROPÄISCHE PATENTSCHRIFT

(11) **EP 1 811 193 B1**
(45) Veröffentlichungstag und Bekanntmachung des Hinweises auf die Patenterteilung: **11.07.2012**
(21) Anmeldenummer: 06026203.7
(22) Anmeldetag: 18.12.2006
(51) Int. Cl.: F16D 55/2265, F16D 65/092

(54) **Scheibenbremse für Fahrzeuge, insbesondere für Nutzfahrzeuge**
Automotive disc brake for utility vehicles
Frein à disque véhiculaire pour véhicule utilitaire

(30) Priorität: 18.01.2006 DE 102006002441
(43) Veröffentlichungstag der Anmeldung: 25.07.2007
(73) Patentinhaber: Wabco Radbremsen GmbH, 68229 Mannheim (DE)
(72) Erfinder: Steinmetz, Andreas, 76889 Gleishorbach (DE); Blatt, Peter, 64658 Fürth (DE); Antony, Paul, 67550 Worms (DE)
(74) Vertreter: Leinweber & Zimmermann

(56) Entgegenhaltungen:
- EP-A- 1 375 952
- DE-A1- 4 036 272
- DE-A1- 4 341 250
- DE-A1- 10 241 157
- DE-U1-202005 005 798
- GB-A- 2 023 754
- JP-A- 9 053 666
- US-A- 3 907 081
- US-A- 4 191 278

## Beschreibung

Die Erfindung betrifft eine Scheibenbremse für Fahrzeuge, insbesondere für Nutzfahrzeuge, mit einem Bremsenträger, einem Bremssattel, einer Bremsscheibe und einem an dem Bremsenträger angebrachten Führungsbolzen, auf dem der Bremssattel bezüglich des Bremsenträgers in Richtung der Drehachse der Bremse verschieblich ist.

Scheibenbremsen der oben genannten Art sind bekannt. Sie sind insbesondere in Nutzfahrzeugen erheblichen Belastungen ausgesetzt, beispielsweise wegen hoher Zuspannkräfte, wegen hoher Bremskräfte und wegen Schwingungen.

Bei herkömmlichen Bremsen der vorgenannten Art dient ein in einer Öffnung des Bremsenträgers ausgebildetes Innengewinde zum Halten des Führungsbolzens. In das Innengewinde wird nämlich eine Schraube eingeschraubt, die den Führungsbolzen hält.

Dieses Innengewinde ist selbstverständlich den oben bereits erwähnten erheblichen Belastungen ausgesetzt. Ferner besteht die Gefahr, daß es durch unsachgemäße Handhabung bei der Montage/Demontage der Bremse beschädigt wird.

Ist das genannte Innengewinde oder ein anderer für die Funktionsfähigkeit der Bremse wesentlicher Teil des Bremsenträgers beschädigt, muß der Bremsenträger ausgetauscht werden, was mit erheblichem Aufwand und entsprechenden Kosten verbunden ist. Ist das Innengewinde bei einem unlösbar mit einer Achsanordnung verbundenen Bremsenträger beschädigt, muß das ganze Bremssystem (Bremsenträger und Achsanordnung) erneuert werden.

Es sei angemerkt, daß unter unlösbar auch einteilige Verbindungen zwischen Bremsenträger und Achsanordnung bzw. Achsteil / -bereichen bzw. Radträger gemeint sind, also überall dort, wo eine Integration realisiert wird.

Ausweislich des Oberbegriffs geht die Erfindung von einer Scheibenbremse aus, wie sie aus der DE-A-40 36 272 bekannt ist.

Der Erfindung liegt die Aufgabe zugrunde, die bekannte Scheibenbremse derart weiterzubilden, daß der Bremsenträger besser vor Beschädigungen geschützt ist und für den Fall, daß dennoch eine Beschädigung aufgetreten ist, eine Reparatur bzw. Wiederherstellung der Scheibenbremse vereinfacht ist.

Erfindungsgemäß wird die gestellte Aufgabe mit einer Scheibenbremse nach Anspruch 1 gelöst. Vorteilhafte Ausgestaltungen der Erfindung sind Gegenstand der Ansprüche 2 bis 14.

Bei der Scheibenbremse nach der Erfindung dient kein einstückig mit dem Bremsenträger ausgebildetes Innengewinde zum Halten des Führungsbolzens. Vielmehr ist dazu eine lösbar entweder an oder in dem Bremsenträger angebrachte Innengewindeeinrichtung vorgesehen. Diese Innengewindeeinrichtung kann aus anderem, insbesondere widerstandsfähigerem Material hergestellt werden als der Bremsenträger. Damit ist die Gefahr der Beschädigung bereits verringert.

Darüber hinaus kann die Innengewindeeinrichtung, weil sie lösbar an dem Bremsenträger angebracht ist, ausgetauscht werden, sofern es dennoch zu einer Beschädigung gekommen sein sollte. Ein solcher Austausch ist mit erheblich geringerem Aufwand verbunden als die Reparatur oder der Austausch des kompletten Bremsenträgers oder des Bremssattels oder der Achsanordnung.

Damit sie sich bei der Montage/Demontage nicht mitdreht, ist die Innengewindeeinrichtung erfindungsgemäß bevorzugt undrehbar an oder in dem Bremsenträger oder dem Bremssattel gehalten.

Weiter bevorzugt ist sie zur Vermeidung des Mitdrehens erfindungsgemäß bevorzugt durch Formschluß mit dem Bremsenträger oder dem Bremssattel drehgekoppelt.

Die Innengewindeeinrichtung weist bevorzugt einen Bund auf. Dieser Bund kann als Anlagefläche an oder in dem Bremsenträger oder dem Bremssattel dienen, um die Innengewindeeinrichtung in Axialrichtung zu fixieren.

Bevorzugt weist der Bund eine Anlagefläche zur Drehkopplung mit dem Bremsenträger oder dem Bremssattel auf.

Mit anderen Worten erfüllt der Bund bei dieser Ausgestaltung eine Doppelfunktion. Er dient nämlich zum einen der Axialfixierung und zum anderen dazu, ein Mitdrehen der Innengewindeeinrichtung bei der Montage/Demontage zu verhindern.

Bevorzugt weist der Bremsenträger eine Aufnahmeöffnung für die Innengewindeeinrichtung auf. Dadurch nimmt sie keinen zusätzlichen Bauraum in Anspruch.

Zusätzlich zu der separaten Innengewindeeinrichtung ist es erfindungsgemäß besonders bevorzugt, daß der Bremsenträger mindestens eine Führungsfläche aufweist, entlang derer im Betrieb ein Bremsbelag und/oder eine Druckplatte gleitet, wobei die Führungsfläche zumindest abschnittweise gehärtet und/oder mit einem Werkstoff beschichtet und/oder belegt ist, der die Verschleißfestigkeit und/oder die Gleitfähigkeit erhöht.

Durch diese Maßnahme ist der Bremsenträger (zusätzlich) vor Beeinträchtigungen geschützt, die insbesondere auf hohe Belastungen zurückgehen. Dadurch ist seine Standzeit verlängert und er muß weniger häufig ausgetauscht werden. Dies ist insbesondere dann vorteilhaft, wenn der Bremsenträger unlösbar an der Achsanordnung angebracht ist, weil dann nur ein Komplettaustausch möglich wäre.

Dabei ist die Führungsfläche bevorzugt härter als eine daran anliegende Fläche des Bremsbelages oder der Druckplatte.

Durch diese Maßnahme werden übermäßige Beanspruchungen in erster Linie zu Lasten des Bremsbelages oder der Druckplatte gehen, wohingegen der Bremsenträger unbeeinträchtigt bleibt.

Nach einer besonders bevorzugten Ausführungsform der Erfindung ist der Bremsenträger an einer Achsanordnung des Fahrzeugs angeschweißt.

Ein solches Anschweißen des Bremsenträgers an der Achsanordnung hat erhebliche mechanische Vorteile. Dadurch ist er zwar unlösbar mit der Achsanordnung verbunden. Da aber durch die oben im einzelnen beschriebenen Maßnahmen die Standzeit des Bremsenträgers wegen Austauschbarkeit der Innengewindeeinrichtung und/oder erhöhter Verschleißfestigkeit/Gleitfähigkeit der Führungsfläche erheblich verlängert ist, ist ein Austausch gar nicht mehr erforderlich.

Bevorzugt weist der Bremsenträger eine Öffnung auf, deren Innenkontur von der Kreisform abweicht und derart an der Außenkontur der Achsanordnung anliegt, daß der Bremsenträger in Umfangsrichtung um die Achse der Bremse formschlüssig mit der Achsanordnung gekoppelt ist.

Mit anderen Worten erfolgt die Einleitung der Bremskräfte in die Achsanordnung nicht über Verschraubungen oder dergleichen, sondern durch den Formschluß des Bremsenträgers mit der Achsanordnung. Beispielsweise auf Scherung oder Zug belastete Verschraubungen können daher entfallen. Ferner sind auch Adapter oder dergleichen unnötig. Dadurch ist eine mechanisch günstige und vom Aufbau her besonders einfache Lösung gefunden.

Der Bremsenträger ist erfindungsgemäß bevorzugt plattenförmig. Diese Ausgestaltung ist insbesondere im Hinblick auf eine möglicherweise vorgesehene Verschweißung des Bremsenträgers mit der Achsanordnung vorteilhaft, weil keine vorstehenden Teile des Bremsenträgers an der Verschweißung hindern.

Erfindungsgemäß weiter bevorzugt steht kein dem Halten oder Führen eines felgenseitigen Bremsbelages dienender Teil des Bremsenträgers über den Außenumfang der Bremsscheibe über. Zum Halten und Führen des felgenseitigen Bremsbelages kann der Bremsenträger daher nach dieser Ausgestaltung nicht dienen. Vielmehr muß das Halten und Führen des felgenseitigen Bremsbelages von dem Bremssattel geleistet werden. Vorteilhaft bei dieser Ausgestaltung ist aber insbesondere wiederum, daß kein Teil des Bremsenträgers beim Verschweißen mit der Achsanordnung stört.

Allerdings ist nach einer weiter bevorzugten Ausführungsform der Erfindung vorgesehen, daß der Bremsenträger zum Halten und Führen eines zuspannseitigen Bremsbelages der Bremse und/oder einer Druckplatte der Bremse dient. Mit anderen Worten sind zum Halten und Führen des zuspannseitigen Bremsbelages und/oder der Druckplatte neben dem Bremsenträger selbst keine weiteren Teile notwendig oder vorgesehen.

Erfindungsgemäß kann vorgesehen sein, daß ein zuspannseitiger Bremsbelag der Bremse symmetrisch zu einer Zuspanneinrichtung liegt, so daß die jeweiligen Mittelachsen aufeinanderfallen, wohingegen ein felgenseitiger Bremsbelag in Richtung quer zur Achse der Bremse in Richtung einer Scheibenauslaufseite bei bevorzugter Drehrichtung versetzt liegt. Mit anderen Worten ist bei dieser Ausgestaltung der Bremssattel quasi verdrillt. Durch diese "Unsymmetrie" werden beim Bremsen unerwünschte Drehmomente zumindest teilweise derart kompensiert, daß der Führungsbolzen entlastet wird. Daraus resultiert eine verbesserte Verschieblichkeit und damit eine höhere Leichtgängigkeit der Bremse. Im übrigen werden die Einzelteile der Bremse weniger beansprucht, woraus wiederum eine höhere Standzeit der Bremse resultiert.

Die obigen Erläuterungen beziehen sich auf eine Scheibenbremse mit einem Führungsbolzen. Die Erfindung ist aber nicht auf solche Ausführungsformen beschränkt. Vielmehr ist sie auch anwendbar auf Ausgestaltungen mit zwei oder mehr Führungsbolzen, wobei gegebenenfalls dann auch zwei oder mehr Innengewindeeinrichtungen lösbar an oder in dem Bremsenträger oder dem Bremssattel angebracht sind.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine von der Fahrzeugmitte gesehene Axialansicht eines Ausführungsbeispiels der erfindungsgemäßen Scheibenbremse,
- Figur 2: Einzelheiten einer Halterung eines Führungsbolzens der Scheibenbremse nach Figur 1, von der Bremsscheibenseite aus gesehen,
- Figur 3: eine Draufsicht auf die Scheibenbremse nach Figur 1 mit eingebauten Bremsbelägen und eingebauter Druckplatte und
- Figur 4: die gleiche Ansicht wie Figur 3, jedoch ohne Bremsbeläge und ohne Druckplatte.

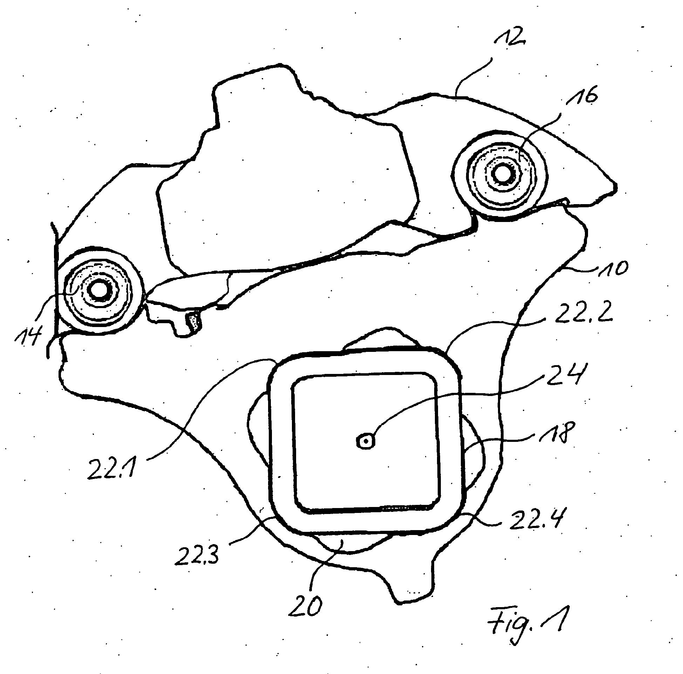

Figur 1 zeigt einen Bremsenträger 10, einen Gleitsattel 12, an dem eine (nicht gezeigte) Betätigungseinrichtung angebracht ist, zwei Zylinderschrauben 14 und 16 und eine im Querschnitt quadratische Achsanordnung 18. Ferner ist eine (nicht gezeigte) Zuspanneinrichtung in dem Gleitsattel 12 angeordnet.

Die Achsanordnung 18 ist in einer Öffnung 20 in dem Bremsenträger 10 aufgenommen. Die Kontur der Öffnung 20 entspricht zwei gegeneinander verdrehten Quadraten, so daß der Bremsenträger 10 in acht unterschiedlichen Winkelstellungen an der Achsanordnung 18 angebracht werden kann. Dabei liegt er in vier Bereichen 22.1 bis 22.4 an der Achsanordnung 18 an. In den genannten Bereichen ist er an die Achsanordnung 18 angeschweißt, um eine Festlegung in Axialrichtung zu bewirken. Der gezeigte Bremsenträger 10 umschließt die Achsanordnung 18 vollständig. Er kann genausogut eine offene Struktur haben, beispielsweise "C"- oder "U"- förmig, bevorzugt von der Kreisform abweichend.

Da sowohl die Öffnung 20 des Bremsenträgers 10 als auch die Achsanordnung 18 eine von der Kreisform abweichende Kontur haben, ist der Bremsenträger 10 über Formschluß mit der Achsanordnung 18 hinsichtlich einer Drehung um die Achse 24 der Bremse gekoppelt. Über diesen Formschluß werden die Bremskräfte beim Bremsen von dem Bremsenträger 10 in die Achsanordnung 18 eingeleitet.

Der Bremsenträger 10 ist plattenförmig, weshalb keine vorstehenden Teile vorhanden sind, die beim Anschweißen an der Achsanordnung 18 stören könnten.

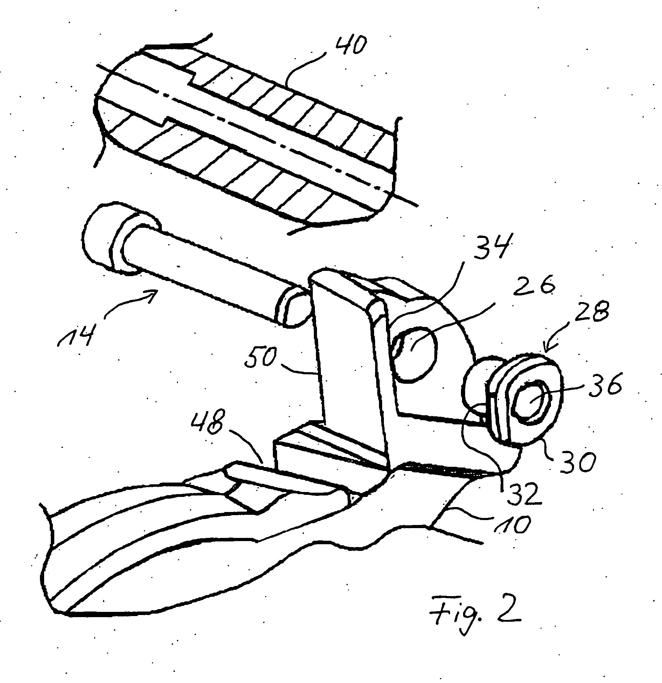

Im folgenden ist unter Bezugnahme auf Figur 2 die Halterung eines von zwei Führungsbolzen erläutert. Die Halterung des anderen Führungsbolzens ist genauso ausgestaltet.

Der Bremsenträger 10 weist eine Durchgangsöffnung 26 auf, in die eine Bundbuchse 28 eingesteckt ist. Die Bundbuchse ist an ihrem Bund 30 zur Ausbildung einer Anlagefläche 32 abgeflacht. Mit der Anlagefläche 32 liegt sie zur Drehkopplung mit dem Bremsenträger 10 an einer Rippe 34 des Bremsenträgers 10 an. Sie trägt ein Innengewinde 36.

In das Innengewinde 36 der Bundbuchse 28 ist die Zylinderschraube 14 eingeschraubt. Die Zylinderschraube 14 hält einen hülsenförmigen Führungsbolzen 40 an dem Bremsenträger 10 in einem beispielsweise formschlüssigen Paßsitz (nicht gezeigt). Auf dem Führungsbolzen 40 ist der Bremssattel 12 gleitend geführt. Die Innenkontur des Führungsbolzens 40 entspricht der Außenkontur der Zylinderschraube 14.

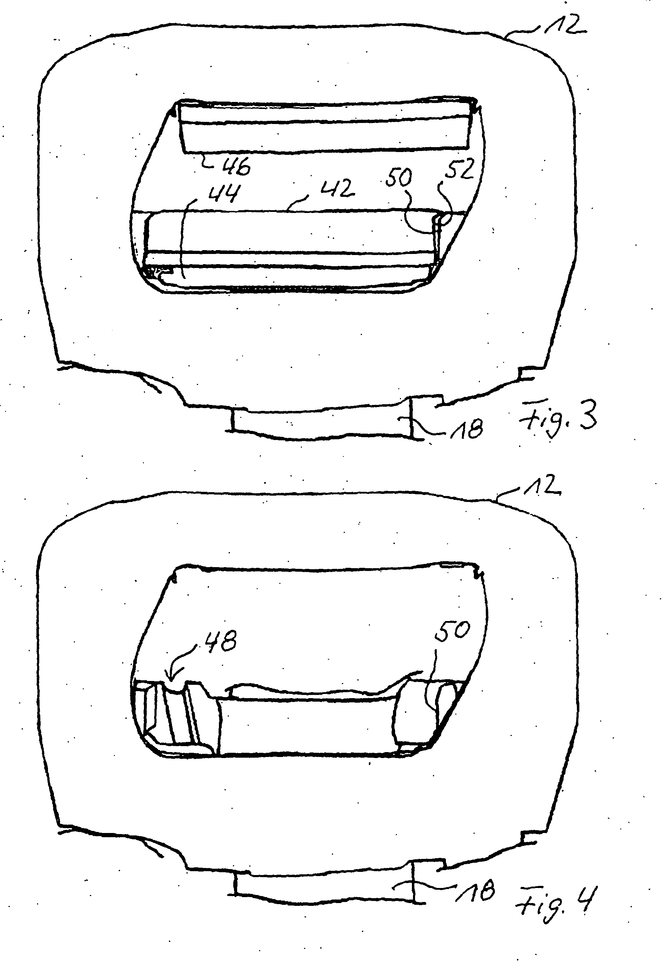

Die Figur 3 zeigt, daß bei dem dargestellten Ausführungsbeispiel ein innen, d.h. zuspannseitig liegender Bremsbelag 42 sowie eine Druckplatte 44 einerseits und ein außen, d.h. felgenseitig gelegener Bremsbelag 46 andererseits gegeneinander versetzt sind. Entsprechend unsymmetrisch ist auch der Bremssattel 12 ausgelegt. Insbesondere liegt bei der gezeigten Ausführungsform der zuspannseitige Bremsbelag 42 "symmetrisch" zu einer (nicht gezeigten) Zuspanneinrichtung, wohingegen der felgenseitige Bremsbelag 46 in Richtung auf die Scheibenauslaufseite bei bevorzugter Scheibendrehrichtung versetzt angeordnet ist. Entsprechend "verdrillt" ist der Bremssattel 12 ausgelegt. Dadurch werden beim Bremsen unerwünschte Drehmomente zumindest teilweise derart kompensiert, daß die Führungsbolzen, von denen einer mit der Bezugszahl 40 versehen ist, entlastet werden. Daraus resultiert eine verbesserte Verschieblichkeit und damit eine höhere Leichtgängigkeit der Bremse. Im übrigen werden die Einzelteile der Bremse weniger beansprucht, woraus eine höhere Standzeit der Bremse resultiert.

Die Druckplatte 44 ist in einer schräg gegen den Bremsscheibeneinlauf angestellten Nut 48 gehalten und geführt.

Bei dem in der Zeichnung dargestellten Ausführungsbeispiel ist eine Führungsfläche 50 des gußeisernen oder schmiedeeisernen Bremsenträgers 10 gehärtet, so daß sie härter ist als eine daran anliegende Anlagefläche 52 des Bremsbelages 42. Dadurch ist die Standzeit des Bremsenträgers 10 verlängert.

Der Bremsenträger kann auch unlösbar an der Achsanordnung angebracht sein. Es sei angemerkt, daß unter unlösbar auch einteilige Verbindungen zwischen Bremsenträger und Achsanordnung bzw. Achsteil / -bereichen bzw. Radträger gemeint sind, also überall dort, wo eine Integration realisiert wird.

Wenngleich dies in der Zeichnung nicht dargestellt ist, kann der Bremsenträger 10 an geeigneter Stelle einen oder mehrere Sensoren halten oder aufnehmen. Das gleiche gilt für Verkabelungen für den oder die Sensoren.

## Patentansprüche

1. Scheibenbremse, insbesondere für Nutzfahrzeuge, mit
einem Bremsenträger (10),
einem Bremssattel (12),
einer Bremsscheibe und
einem an dem Bremsenträger (10) angebrachten Führungsbolzen (40), auf dem der Bremssattel (12) bezüglich des Bremsenträgers (10) in Richtung der Drehachse (24) der Bremsscheibe verschieblich ist, **gekennzeichnet durch** eine Innengewindeeinrichtung (28) zum Halten des Führungsbolzens (40), wobei
die Innengewindeeinrichtung (28) lösbar an oder in dem Bremsenträger (10) angebracht ist und
eine in die Innengewindeeinrichtung (28) eingeschraubte Schraube (14) vorgesehen ist, auf der ein hülsenförmiger Gleitbolzen (40) zum Halten und Führen des Bremssattels (12) sitzt.

2. Scheibenbremse nach Anspruch 1, **dadurch gekennzeichnet, daß** die Innengewindeeinrichtung (28) undrehbar an oder in dem Bremsenträger (10) gehalten ist.

3. Scheibenbremse nach Anspruch 1 oder 2, **dadurch gekennzeichnet, daß** die Innengewindeeinrichtung (28) durch Formschluß mit dem Bremsenträger (10) drehgekoppelt ist.

4. Scheibenbremse nach einem der vorangehenden Ansprüche, **dadurch gekennzeichnet, daß** die Innengewindeeinrichtung (28) einen Bund (30) aufweist.

5. Scheibenbremse nach Anspruch 4, **dadurch gekennzeichnet, daß** der Bund (30) eine Anlagefläche (32) zur Drehkopplung mit dem Bremsenträger (10) oder dem Bremssattel (12) aufweist.

6. Scheibenbremse nach einem der vorangehenden Ansprüche, **dadurch gekennzeichnet, daß** der Bremsenträger (10) eine Aufnahmeöffnung (26) für die Innengewindeeinrichtung (28) aufweist.

7. Scheibenbremse nach einem der vorangehenden Ansprüche, **dadurch gekennzeichnet, daß** der Bremsenträger (10) mindestens eine Führungsfläche (50) aufweist, entlang derer im Betrieb ein Bremsbelag (42) und/oder eine Druckplatte (44) gleitet, wobei die Führungsfläche (50) zumindest abschnittweise gehärtet und/oder mit einem Werkstoff beschichtet und/oder belegt ist, der die Verschleißfestigkeit und/oder die Gleitfähigkeit erhöht.

8. Scheibenbremse nach Anspruch 7, **dadurch gekennzeichnet, daß** die Führungsfläche (50) härter ist als eine daran anliegende Fläche (52) des Bremsbelages (42) oder der Druckplatte (44).

9. Scheibenbremse nach einem der vorangehenden Ansprüche, **dadurch gekennzeichnet, daß** der Bremsenträger (10) an einer Achsanordnung (18) des Fahrzeugs angeschweißt ist.

10. Scheibenbremse nach einem der vorangehenden Ansprüche, **dadurch gekennzeichnet, daß** der Bremsenträger (10) eine Öffnung (20) aufweist, deren Innenkontur von der Kreisform abweicht und der derart an der Außenkontur der Achsanordnung (18) anliegt, daß der Bremsenträger (10) in Umfangsrichtung um die Achse (24) der Bremse formschlüssig mit der Achsanordnung (18) gekoppelt ist.

11. Scheibenbremse nach einem der vorangehenden Ansprüche, **dadurch gekennzeichnet, daß** der Bremsenträger (10) plattenförmig ist.

12. Scheibenbremse nach einem der vorangehenden Ansprüche, **dadurch gekennzeichnet, daß** kein dem Halten oder Führen eines felgenseitigen Bremsbelages dienender Teil des Bremsenträgers (10) über den Außenumfang der Bremsscheibe übersteht.

13. Scheibenbremse nach einem der vorangehenden Ansprüche, **dadurch gekennzeichnet, daß** der Bremsenträger (10) zum Halten und Führen eines zuspannseitigen Bremsbelages (42) der Bremse und/oder einer Druckplatte (44) der Bremse dient.

14. Scheibenbremse nach einem der vorangehenden Ansprüche, **dadurch gekennzeichnet, daß** ein zuspannseitiger Bremsbelag (42) symmetrisch zu einer Zuspanneinrichtung liegt, wohingegen ein felgenseitiger Bremsbelag (46) in Richtung quer zur Drehachse (24) der Bremsscheibe in Richtung einer Scheibenauslaufseite bei bevorzugter Drehrichtung versetzt liegt.

## Claims

1. A disc brake, in particular for utility vehicles, comprising
a brake carrier (10),
a brake calliper (12),
a brake disc, and
a guiding bolt (40) attached to the brake carrier (10) on which the brake calliper (12) can be displaced relative to the brake carrier (10) in the direction of the axis of rotation (24) of the brake disc,
**characterised by** an internal thread means (28) for holding the guiding bolt (40),
the internal thread means (28) being attached releaseably to or in the brake carrier (10), and
a screw (14) screwed into the internal thread means (28) being provided on which a sleeve-like sliding bolt (40) sits for holding and guiding the brake calliper (12).

2. The disc brake according to Claim 1, **characterised in that** the internal thread means (28) is held non-rotationally on or in the brake carrier (10).

3. The disc brake according to Claim 1 or 2, **characterised in that** the internal thread means (28) is rotationally coupled to the brake carrier (10) by form closure.

4. The disc brake according to any of the preceding claims, **characterised in that** the internal thread means (28) has a flange (30).

5. The disc brake according to Claim 4, **characterised in that** the flange (30) has a contact surface (32) for swivel coupling to the brake carrier (10) or the brake calliper (12).

6. The disc brake according to any of the preceding claims, **characterised in that** the brake carrier (10) has a receiving opening (26) for the internal thread means (28).

7. The disc brake according to any of the preceding claims, **characterised in that** the brake carrier (10) has at least one guiding surface (50) along which a brake lining (42) and/or a pressure plate (44) slides during operation,
the guiding surface (50) being at the very least partially hardened and/or coated with a material and/or lined with a material which increases the resistance to wear and/or the slideability.

8. The disc brake according to Claim 7, **characterised in that** the guiding surface (50) is harder than an adjacent surface (52) of the brake lining (42) or the pressure plate (44).

9. The disc brake according to any of the preceding claims, **characterised in that** the brake carrier (10) is welded onto an axle arrangement (18) of the vehicle.

10. The disc brake according to any of the preceding claims, **characterised in that** the brake carrier (10) has an opening (20), the inner contour of which deviates from the circular form and which rests against the outer contour of the axis arrangement (18) such that the brake carrier (10) is coupled by form closure to the axle arrangement (18) in the circumferential direction around the axle (24) of the brake.

11. The disc brake according to any of the preceding claims, **characterised in that** the brake carrier (10) is in the form of a plate.

12. The disc brake according to any of the preceding claims, **characterised in that** no part of the brake carrier (10) serving to hold or guide a rim-side brake lining projects over the outer circumference of the brake disc.

13. The disc brake according to any of the preceding claims, **characterised in that** the brake carrier (10) is used for holding and guiding an actuation-side brake lining (42) of the brake and/or a pressure plate (44) of the brake.

14. The disc brake according to any of the preceding claims, **characterised in that** an actuation-side brake lining (42) lies symmetrically to an actuating device, whereas a brake lining (46) on the rim side lies offset in the direction transverse to the axis of rotation (24) of the brake disc in the direction of a disc run-out side with the preferred direction of rotation.

## Revendications

1. Frein à disque, notamment pour véhicule utilitaire, comportant :
un support de frein (10),
un étrier de frein (12),
un disque de frein, et
un boulon de guidage (40) monté sur le support de frein (10) et sur lequel l'étrier de frein (12) est déplaçable par rapport au support de frein (10) dans la direction de l'axe de rotation (24) du disque de frein, via un élément taraudé (28) destiné à maintenir le boulon de guidage (40),
l'élément taraudé (28) étant monté de manière amovible sur ou dans le support de frein (10), et
**caractérisé par**
une vis (14) prévue dans l'élément taraudé (28) en y étant vissée, sur laquelle est placé un boulon de glissement (40) en forme de douille pour maintenir et guider l'étrier de frein (12).

2. Frein à disque selon la revendication 1, **caractérisé en ce que** l'élément taraudé (28) est maintenu fixe en rotation sur ou dans le support de frein (10).

3. Frein à disque selon la revendication 1 ou 2, **caractérisé en ce que** l'élément taraudé (28) est couplé en rotation avec le support de frein (10) par complémentarité de forme.

4. Frein à disque selon l'une des revendications précédentes, **caractérisé en ce que** l'élément taraudé (28) présente une collerette (30).

5. Frein à disque selon la revendication 4, **caractérisé en ce que** la collerette (30) présente une surface d'appui (32) destinée à être couplée en rotation avec le support de frein (10) ou l'étrier de frein (12).

6. Frein à disque selon l'une des revendications précédentes, **caractérisé en ce que** le support de frein (10) présente une ouverture (26) destinée à recevoir l'élément taraudé (28).

7. Frein à disque selon l'une des revendications précédentes, **caractérisé en ce que** le support de frein (10) présente au moins une surface de guidage (50), le long de laquelle, à l'usage, coulissent une garniture de frein (42) et/ou une plaque de pression (44), la surface de guidage (50) étant au moins partiellement durcie et/ou revêtue ou garnie d'un matériau venant renforcer la résistance à l'usure et/ou l'aptitude au coulissement.

8. Frein à disque selon la revendication 7, **caractérisé en ce que** la surface de guidage (50) est plus dure qu'une surface (52) de la garniture de frein (42) ou de la plaque de pression (44) qui y est apposée.

9. Frein à disque selon l'une des revendications précédentes, **caractérisé en ce que** le support de frein (10) est soudé à un dispositif d'essieu (18) du véhicule.

10. Frein à disque selon l'une des revendications précédentes, **caractérisé en ce que** le support de frein (10) présente une ouverture (20) dont le contour intérieur diffère de la forme circulaire et qui se présente de telle manière par rapport au contour extérieur du dispositif d'essieu (18) que le support de frein (10) vient se coupler dans le sens circonférentiel autour de l'axe (24) du frein, par complémentarité de forme, avec le dispositif d'essieu (18).

11. Frein à disque selon l'une des revendications précédentes, **caractérisé en ce que** le support de frein (10) est en forme de plaque.

12. Frein à disque selon l'une des revendications précédentes, **caractérisé en ce qu'**aucune partie du support de frein (10) servant à maintenir ou à guider une garniture de frein du côté de la jante ne dépasse au-dessus de la circonférence extérieure du disque de frein.

13. Frein à disque selon l'une des revendications précédentes, **caractérisé en ce que** le support de frein (10) sert à maintenir et à guider une garniture de frein (42) côté application du frein et/ou une plaque de pression (44) du frein.

14. Frein à disque selon l'une des revendications précédentes, **caractérisé en ce qu'**une garniture de frein (42) côté application est disposée de manière symétrique par rapport à un dispositif d'application de frein, tandis qu'une garniture de frein (46) côté jante est décalée transversalement à l'axe de rotation (24) du disque de frein en direction d'une face de sortie du disque dans le sens de rotation préférentiel.
